# EUROPEAN PATENT APPLICATION

(11) **EP 2 610 831 A1**
(43) Date of publication of application: **03.07.2013**
(21) Application number: 12181163.2
(22) Date of filing: 21.08.2012
(51) Int. Cl.: G08B 17/12, H04B 7/185, A62C 3/02

(54) **In-flight system with infrared camera and communication method thereof**

(30) Priority: 30.12.2011 CN 201110461065
(71) Applicant: Guangzhou SAT Infrared Technology Co., Ltd., Guangzhou Guangdong 510730 (CN)
(72) Inventor: Wu, Jiping, Guangzhou Guangdong 510730 (CN)
(74) Representative: Pallini, Diego

(57) **Abstract**

A in-flight system with infrared camera and its communication method, the system comprises which comprises an infrared camera mounted on an aircraft, the system also comprises: a signal collection and process unit provided on the infrared camera for obtain image signals by capturing infrared images of a monitored object and transforming the image signals into communication signals; a communication signal transmission unit for receiving the communication signals coming from the signal collection and process unit and emitting the received communication signals out via a communication channel, and receiving communication signals from out side so as to be transmitted to the infrared camera; and an on-board satellite communication apparatus for emitting the communication signals to an international communication satellite through a satellite antenna, and receiving communication signals coming from the international communication satellite so as to be transmitted to the communication signal transmission unit. The system can be connected to an international communication satellite, a ground base station or a ground network, and a server of a ground control center, through an on-board satellite communication apparatus, such that a real-time communication between the infrared camera and the ground control center is realized.

## Description

### FIELD OF THE INVENTION

The present application relates to an infrared camera, especially relates to an infrared camera used for aero-flight and monitoring and a communication method thereof.

### BACKGROUND

The infrared cameras have been widely used in various fields of technology. Conventional infrared cameras are mostly handheld equipments. People need to hold the equipments in their hands in order to operate them for collecting image information and for performing operations on them. Generally, an infrared camera used for monitoring equipments must be connected to a control system through wire or short-distance wireless communication apparatuses. Users may define parameters of the infrared camera and perform capture operations through the control system, and obtain information of infrared images or infrared videos captured by the infrared camera through communication apparatuses. At present, conventional wireless communication with the infrared cameras are mainly short-distance communications, such as performing data exchange with an infrared camera through Bluetooth communication.

However, in some commercial or civil field, it is sometimes necessary to perform a full-scale aero-monitoring of an observed object or area. For example, in case of necessary intervention by forest fire alarm, forest fire rescue, or even by monitoring of agricultural apparatuses or areas such as hydro or electric facilities for large-scale croplands, aircrafts such as mini aircrafts for observation, airplanes for aero-spraying water or pesticides etc. may be used. When those aircrafts are mounted with infrared cameras thereon, infrared images or infrared videos may be captured for large or local regions of the monitored forests and croplands, and the information of the infrared images or infrared videos captured by the infrared cameras may be collected and analyzed in time through a ground control center, for performing thorough observations and analysis of the acquired images and subsequent undertaking of counter measures.

However, until now, no related solution or products for long-distance and wireless communications with respect to aero-working infrared cameras have been developed, and the present invention is therefore confronted with the need of installing infrared cameras on flying objects and transmitting infrared image information collected by the cameras in real time to a ground control center.

### SUMMARY OF THE INVENTION

In order to achieve the above objects, the present application has been developed to provide a flight system of an infrared camera and a communication method thereof. The system is connected to an international communication satellite, a ground base station and a communication network through an on-board satellite communication apparatus, in order to transform the information of infrared images or videos captured by the infrared camera into communication signals so as to be thereby transmitted in real time to a ground control center, while also transmit control signals or the like coming from the ground control center in real time to the flight system of the infrared camera. Therefore the aero-flight infrared camera and the ground control center may communicate bi-directionally with each other in real time, which is helpful for a large area monitoring of the observed object or location and thus for immediate reaction and implementation of subsequent counter measures.

In particular, the flight system of the infrared camera comprises: using an infrared detector circuit elaboration module to collect image data of infrared signals, wirelessly transmitting the collected image data, after being compressed and coded, through GSM/GPRS modules to on-board satellite communication apparatus, so as to perform transmission of signals such as communication signals or multimedia information through a ground base station, or realize wireless Wi-Fi network logging. The communication signals for transmitting and receiving information signals and network logging are all transmitted to the international communication satellite through on-board satellite communication apparatuses, and the international communication satellite then contacts a ground base station or a ground network. A server of the ground control center receives the data of the corresponding infrared image signals from the ground base station or the ground network for further data elaboration, and transmits the control signals or the like reversely to the flight system of the infrared camera through above communication apparatuses and communication networks.

In order to realize the object, the present application provides a flight system of an infrared camera, wherein the infrared camera is mounted on an aircraft, the system comprising: a signal collection and process unit provided on the infrared camera, for obtain image signals by capturing infrared images of a monitored object and transforming the image signals into communication signals; a communication signal transmission unit for receiving the communication signals coming from the signal collection and process unit and emitting the received communication signals out via a communication channel, and receiving communication signals from out side so as to be transmitted to the infrared camera; and an on-board satellite communication apparatus for emitting the communication signals coming from the communication signal transmission unit to an international communication satellite through a satellite antenna, and receiving communication signals coming from the international communication satellite so as to be transmitted to the communication signal transmission unit.

According to an embodiment of the present application, the signal collection and process unit comprises: an image collection module comprising an optical lens and an infrared detector circuit, wherein the optical lens collects infrared radiation signals coming from the monitored object so as to capture infrared images of the monitored object, and the infrared detector circuit transforms incident infrared radiation signals passing through the optical lens into electrical signals so as to be output as image signals; an image process module for receiving the image signals and compress the received image signals into binary code flows so as to be output as digital signals; and a CPU control module for receiving the digital signals and storing the received digital signals in format of files, transforming the stored digital signals into communication signals under communication interface protocols, and transmitting the communication signals, by driving and controlling the communication signal transmission unit, to the on-board satellite communication apparatus via a communication network.

According to an embodiment of the present application, the communication signal transmission unit comprises: a GSM/GPRS module for transmitting the communication signals via a GPRS channel of GPRS network, or transmitting the communication signals in way of short messages via a SMS channel, and the GSM/GPRS module comprises: a standard RS232 bidirectional interface for bidirectionally receiving and transmitting the communication signals; a SIM card connected with the standard RS232 bidirectional interface, wherein the SIM card has short-massage functions and GPRS functions for bidirectional transformation between communication signals and multimedia information; and an antenna connected with the SIM card, wherein the antenna emits communication signals or multimedia information to the on-board satellite communication apparatus so as to perform communication through the international communication satellite and a ground base station, and receives communication signals or multimedia information coming from the on-board satellite communication apparatus; and a Wi-Fi circuit module wirelessly connected to a Wi-Fi network, for communicating with the international communication satellite and a ground network through the on-board satellite communication apparatus.

According to an embodiment of the present application, the on-board satellite communication apparatus comprises an on-board mobile communication apparatus, a satellite communication assembly and a satellite antenna, and the on-board satellite communication apparatus is configured to emit the communication signals to the international communication satellite through the on-board satellite communication apparatus so as to perform communication via the ground base station or the ground network, and to receive communication signals coming from the international communication satellite through the satellite antenna so as to be transmitted to the communication signal transmission unit.

According to an embodiment of the present application, the on-board mobile communication apparatus comprises a Wi-Fi network module, said module being configured to bi-directionally communicate signals or transmit multimedia information with the Wi-Fi circuit module.

According to an embodiment of the present application, the international communication satellite transmits communication signals coming from the aircraft to a server (4) of the infrared camera through a ground base station or a ground network, and transmits communication signals coming from the server to the on-board satellite communication apparatus through the ground base station or the ground network and also through the international communication satellite, wherein the server is a computer or a mobile phone connected to the communication network.

According to an embodiment of the present application, the infrared camera is rotatably mounted on a body of the aircraft through a pan and tilt, with a transparent hood provided thereon to protect the infrared camera.

In order to achieve the above objects, the present application also provides a communication method of a flight system of an infrared camera comprising an infrared camera provided on an aircraft, the method comprises steps of: transforming image signals obtained by capturing infrared images of a monitored object by the infrared camera into communication signals; receiving and transmitting communication signals via a communication channel, performing aero-communication of the communication signals in way of free roaming; and emitting the communication signals to an international communication satellite through a satellite antenna, and receiving communication signals coming from the international communication satellite, wherein the communication signals comprises: communication signals obtained by signal transforming and related with image signals of the infrared images, and communication signals coming from a server.

According to an embodiment of the present application, the aero-communication of communication signals comprises a step of transmitting the communication signals via a GPRS channel of GPRS network, or a step of transmitting the communication signals via a SMS channel in way of short messages.

According to an embodiment of the present application, the aero-communication of communication signals comprises a step of transmitting the communication signals through a Wi-Fi network.

According to an embodiment of the present application, the communication signals coming from the infrared camera are transmitted to the server through an on-board satellite communication apparatus of the flight system of the infrared camera and via the international communication satellite and its ground base station or its ground network.

According to an embodiment of the present application, the communication signals coming from the server are transmitted to the on-board satellite communication apparatus of the flight system of the infrared camera via the ground base station 3 or the ground network, and also through the international communication satellite, and then to the communication signal transmission unit through the on-board satellite communication apparatus, so as to be output to the infrared camera.
The flight system of an infrared camera in the present application is connected to an international communication satellite, a ground base station or a ground network through on-board satellite communication apparatus, thus transmitting the data signals related to the infrared images or videos captured by the infrared camera in real time to a ground control center, while also transmitting the control signals or the like in real time from the ground control center to the flight system of the infrared camera, such that the aero-flight infrared camera and the ground control center are able to communicate bi-directionally with each other in real time,

### BRIEF DESCRIPTION OF THE DRAWING

FIG. 1 is a diagram showing the working principles of the flight system of an infrared camera according to an embodiment of the present application.
FIG. 2 is a block diagram showing the configurations of the flight system of an infrared camera shown in FIG. 1.
FIG. 3 is diagram showing an example of the flight system of an infrared camera in the present application.
FIG. 4 is a flow chart showing the communication method of the flight system of an infrared camera according to an embodiment of the present application.

The reference signs are explained as below:
1-infrared camera
   11-signal collection and process unit
      111-image collection module
      112-image process module
      113-CPU control module
   12-communication signal transmission unit
      121-GSM/GPRS module
      122-Wi-Fi circuit module
   13-on-board satellite communication apparatus
      131-on-board mobile communication apparatus
      132-satellite communication assembly
      133-satellite antenna
2-international communication satellite
3-ground base station
3' -ground network
4-server
5-aircraft
   50-aircraft body
   51-transparent hood
   52-pan and tilt

### DESCRIPTION OF THE EMBODIMENTS

The advantages of the present application will become more apparent from the following detailed description of the embodiments, taken in conjunction with the accompanying drawings. The embodiments here are only used to illustrate but not to limit the present application.

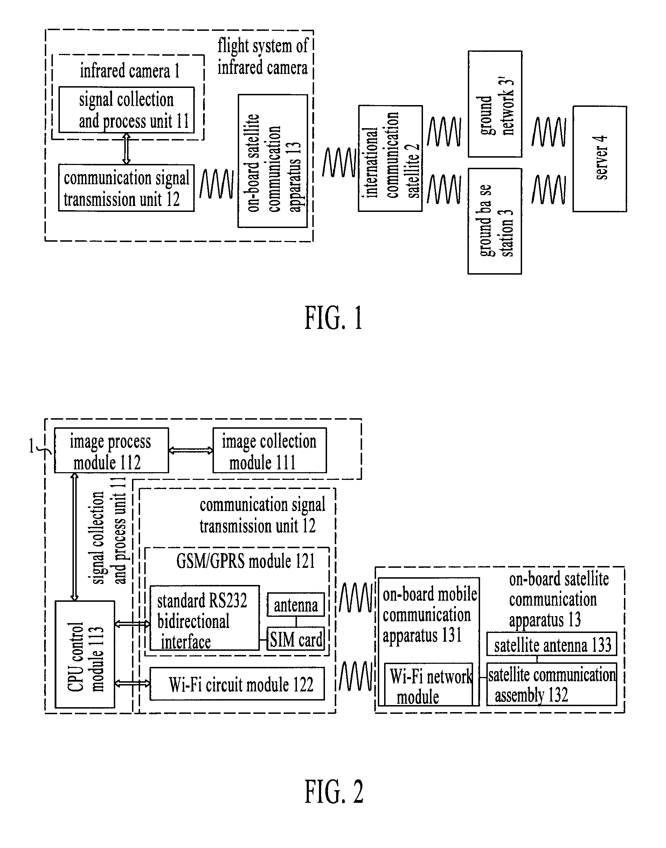

FIG. 1 shows an embodiment of the flight system of an infrared camera in the present application. The flight system of the infrared camera may comprise an infrared camera 1 installed on an aircraft 5. The system may also comprise: a signal collection and process unit 11 provided on the infrared camera 1 for obtain image signals by capturing infrared images of a monitored object and transforming the image signals into communication signals; a communication signal transmission unit 12 for receiving the communication signals coming from the signal collection and process unit 11 and emitting them out via a communication channel, and receiving communication signals from out side so as to be transmitted to the infrared camera 1; and an on-board satellite communication apparatus 13 for emitting the communication signals coming from the communication signal transmission unit 12 to the international communication satellite 2 through a satellite antenna, and receiving communication signals coming from the international communication satellite 2 so as to be transmitted to the communication signal transmission unit 12.

FIG. 2 is a block diagram showing the configurations of the flight system of an infrared camera shown in FIG. 1.

As shown in FIG. 2, the signal collection and process unit 11 may comprise: an image collection module 111 comprising an optical lens and an infrared detector circuit, wherein the optical lens collects infrared radiation signals coming from the monitored object so as to capture infrared images of the monitored object, and the infrared detector circuit transforms incident infrared radiation signals passing through the optical lens into electrical signals so as to be output as image signals; an image process module 112 receiving the image signals and compressing them into binary code flows so as to be output as digital signals; and a CPU control module 113 receiving the digital signals and storing the digital signals in format of files, transforming the stored digital signals into communication signals under communication interface protocols, and transmitting the communication signals, by driving and controlling the communication signal transmission unit 12, to the on-board satellite communication apparatus 13 via a communication network.

The infrared detector is a device for transforming the incident infrared radiation signals into electrical signals so as to be output. The infrared data collected by the image collection module 111 are transmitted to the image process module 112. The image signals, after being transformed and compressed by the image process module 112, are turned into binary code flows (digital signals). The system uses a CPU control module 113 to manage the binary code flows.

According to an embodiment of the present application, the communication signal transmission unit 12 may comprise: a GSM/GPRS module 121 for transmitting the communication signals via a GPRS channel of GPRS network, or transmitting the communication signals in way of short messages via a SMS channel; and a Wi-Fi circuit module 122 wirelessly connected to a Wi-Fi network, and for communicating with a ground network 3' through the on-board satellite communication apparatus 13.

The GSM/GPRS module 121 may comprise: a standard RS232 bidirectional interface for bidirectionally receiving and transmitting the communication signals; a SIM card connected with the standard RS232 bidirectional interface, wherein the SIM card has short-massage functions and GPRS functions for bidirectional transformation between communication signals and multimedia information; and an antenna connected with the SIM card, wherein the antenna emits communication signals or multimedia information to the on-board satellite communication apparatus 13 so as to perform communication through the international communication satellite 2 and the ground base station 3, and receives communication signals or multimedia information coming from the on-board satellite communication apparatus 13. The SIM card here has the same principle as that of a mobile phone SIM card, mainly used to transmit and receive information such as commands or pictures.

The Wi-Fi circuit module 122 is connected with the signal collection and process unit 11 and communicates with the on-board satellite communication apparatus 13. The Wi-Fi circuit module 122 performs the wireless connection to a Wi-Fi network, receives the communication signals from the signal collection and process unit 11, transmits the communication signals to the on-board satellite communication apparatus 13 under Wi-Fi wireless communication protocols, so as to be communicated through the international communication satellite 2 and the ground network 3', and transmits communication signals coming from the on-board satellite communication apparatus 13 under Wi-Fi wireless communication protocols to the signal collection and process unit 11.

Both ways of the communication (SIM card communication or Wi-Fi network communication) are all available for the present application, while the SIM card communication is stronger in function, and simpler in the way of information transmission.

According to an embodiment of the present application, the on-board satellite communication apparatus 13 may comprise an on-board mobile communication apparatus 131, a satellite communication assembly 132 and a satellite antenna 133. The on-board satellite communication apparatus 13 is to emit the communication signals to the ground base station 3 or the ground network 3'of the international communication satellite 2 through the on-board satellite communication apparatus 131, and receive communication signals coming from the international communication satellite 2 through the satellite antenna 133 so as to be transmitted to the communication signal transmission unit 12.

The on-board mobile communication apparatus 131 may comprise a Wi-Fi network module, the Wi-Fi network module being configured to bi-directionally communicate signals or transmit multimedia information with the Wi-Fi circuit module 122.

The CPU control module 113 in the present application mainly performs functions of driving the GSM/GPRS module, controlling Wi-Fi devices and periphery devices, and switching among interface protocols etc. The CPU control module 113 may store the binary code flows compressed by the image process module 112 in format of files, and drive the GSM/GPRS module to transmit image data via a GSM network; or transmit data via a network by using Wi-Fi functions.

The components of the system except the infrared detector circuit for collecting infrared images may be designed with different chips according to the development of techniques in different time periods, while the infrared detector circuit may be fixed.

The GSM/GPRS module 121 in the present application may transmit data either via the GPRS network afforded by China Mobile Communications Corporation, or in way of short messages (SMS). A user may select one the GPRS channel or the SMS channel according to actual situations, and may switch between those channels at any time. The configuration of the GSM/GPRS module 121 may comprise a standard RS232 bidirectional interface, a mobile phone antenna, and a SIM card with short-message functions and GPRS functions enabled, the SIM card can transmit and receive multimedia information. The Wi-Fi circuit module may allow the flight system of the infrared camera in the present application to perform Wi-Fi communication functions, and to be wirelessly connected to the network.

The flight infrared camera in the present application may perform data communication with a server 4 of the ground control center in two ways, which are respectively a way of SIM card short-message transmission and a way of Wi-Fi network transmission. The international communication satellite 2 transmits communication signals coming from the aircraft to the server 4 of the ground control center through the ground base station 3 or the ground network 3', and transmits communication signals coming from the server 4 to the on-board satellite communication apparatus 13 through the ground base station 3 or ground network 3' and also through the international communication satellite 2, wherein the server 4 is a computer or a mobile phone connected to the communication network.

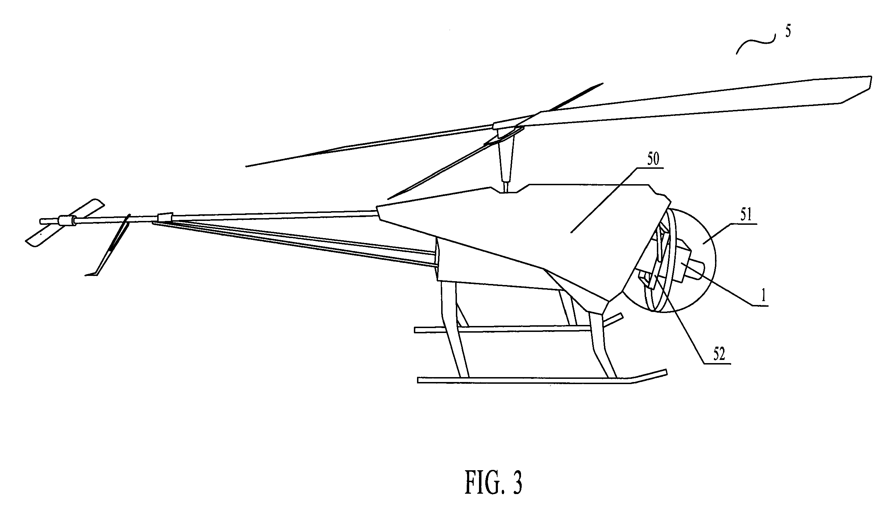

FIG. 3 is diagram showing an example of the flight system of an infrared camera in the present application, wherein the infrared camera 1 in the present application may be rotatably mounted on a body 50 of the aircraft 5 through a pan and tilt 52, with a transparent hood 51 provided thereon to protect the infrared camera 1. The aircraft 5 may be one of mini aircrafts used for observation or airplanes for aero-spraying water or pesticides, for example.

The flight system of an infrared camera in the present application consists of two portions, one is the on-board satellite communication apparatus 13, another is a portion of the infrared camera circuits (comprising the communication signal transmission unit 12 and the signal collection and process unit 11 mounted on the infrared camera 1). Those two portions may be mounted separately. Since there are some airplanes which have on-board satellite communication apparatuses already mounted thereon, it's only needed to attach another portion thereto. The on-board satellite communication apparatus 13 is usually mounted in a cabin of the aircraft. The communication signal transmission unit 12 (for signal collections and elaboration, and transmitting the signals back to the ground through the on-board satellite communication apparatus 13) may be set on a head portion of the airplane.

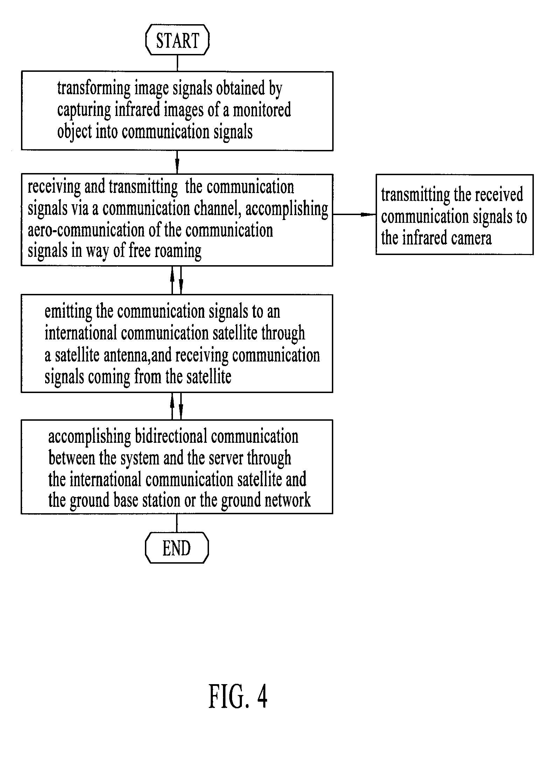

Hereafter, the communication method of the flight system of an infrared camera according to an embodiment of the present application will be described in detail in conjunction with FIG. 4.

As shown in FIG. 4, the method comprises steps of: transforming image signals obtained by capturing infrared images of a monitored object by an infrared camera 1 into communication signals; receiving and transmitting the received communication signals via a communication channel, accomplishing aero-communication of the communication signals in way of free roaming; and emitting the communication signals to an international communication satellite 2 through a satellite antenna, and receiving communication signals coming from the international communication satellite 2, wherein the communication signals comprises: communication signals obtained by signal transforming and related with image signals of the infrared images; and communication signals coming from a server 4.

The aero-communication of communication signals comprises transmitting the communication signals via a GPRS channel of GPRS network, or transmitting the communication signals via a SMS channel in way of short messages. The aero-communication of communication signals comprises transmitting the communication signals through a Wi-Fi network.

The communication signals coming from the infrared camera 1 are transmitted to a server 4 by an on-board satellite communication apparatus 13 of the flight system of the infrared camera through an international communication satellite 2 and its ground base station 3 or its ground network 3'.

On the other hand, the communication signals coming from the server 4 are transmitted to the on-board satellite communication apparatus 13 of the flight system of the infrared camera through the ground base station 3 or the ground network 3', and also through the international communication satellite 2, and then to the communication signal transmission unit 12 through the on-board satellite communication apparatus 13, so as to be output to the infrared camera 1.

The communication signals coming from the server 4 may comprise infrared camera control signals, voice signals, video or image display signals, which are emitted from a ground control center through a server or a communication apparatus, and used for controlling capture actions and angles of the infrared camera 1 on the aircraft, so as to perform better real-time observation for the monitored object, and to transmit commands related to subsequent elaboration and counter measures.

Specifically, for example, the control signals for the infrared camera transmitted by the server 4 may be used for controlling a series of operations of the infrared camera, wherein the operations comprise collecting and transmitting voice and image information, lens focusing (to realize better information collection by way of lens focusing according to actual situations), and so on. The signals received by the server 4 may comprise information transmitted back from the aircraft and information of voices and videos, etc..

The ground communication of the present application may adopt the site mode. In order to guarantee the aero-communication not affecting the flight safety, the flight system of an infrared camera may perform aero-communication in way of free roaming, with the SIM card and the GSM/GPRS module 121 combined with each other, which is equivalent to setting a mobile site on the flight system. When the GSM/GPRS module 121 is started up to perform data transmission in way of short messages (SMS), the GSM/GPRS module 121 is not directly connected to the ground communication network, and short-message signals may be firstly transmitted to the on-board satellite communication apparatus 13, then to the international communication satellite 2 by the on-board satellite communication apparatus 13, and then to the ground base station 3 by the international communication satellite 2, finally accomplishing data exchange with the server or communication apparatuses of the ground control center through the ground base station 3. In this process, it's equivalent to simulating a GSM mobile phone network in a cabin of the aircraft 5, which only needs very low emitting energy to perform aero-communication, thereby falling within the range of the aircraft security operation.

Similar to the way of short-message aero-transmission, when using Wi-Fi functions, since the on-board satellite communication apparatus 13 has a Wi-Fi network module on board, the communication signals on the network are connected to the on-board satellite communication apparatus 13. For example, the communication signals are transmitted to the international communication satellite 2 through the on-board satellite communication apparatus 13, and then connected to the ground network 3', and the server 4 may obtain related information through the ground network 3', and vice versa.

The SIM card and the Wi-Fi circuit module are two relatively separated portions, which are respectively used for two different ways of signals transmission. The flight system of an infrared camera in the present application may freely choose one of those two ways of communication.

## Claims

1. In-flight system with infrared camera for aero-monitoring, which comprises:
an infrared camera (1) mounted on an aircraft (5);
a signal collection and process unit (11) provided on the infrared camera (1), for obtaining image signals by capturing infrared images of a monitored object or location and transforming the image signals into communication signals;
a bi-directional communication signal transmission unit (12) for receiving the communication signals coming from the signal collection and process unit (11) and emitting the received communication signals via a communication channel, and receiving communication signals from outside and transmit them to the infrared camera (1); and
an on-board satellite communication apparatus (13) for emitting the communication signals coming from the communication signal transmission unit (12) to an international communication satellite (2) through a satellite antenna, and receiving communication signals coming from the international communication satellite (2) so as to be transmitted to the communication signal transmission unit (12).

2. The in-flight system according to claim 1, wherein the signal collection and process unit (11) comprises:
an image collection module (111) comprising an optical lens and an infrared detector circuit, wherein the optical lens collects infrared radiation signals coming from the monitored object so as to capture infrared images of the monitored object, and the infrared detector circuit transforms incident infrared radiation signals passing through the optical lens into electrical signals so as to be output as image signals;
an image process module (112) for receiving the image signals and compress the received image signals into binary code flows so as to be output as digital signals; and
a CPU control module (113) for receiving the digital signals and storing the received digital signals in format of files, transforming the stored digital signals into communication signals under communication interface protocols, and transmitting the communication signals, by driving and controlling the communication signal transmission unit (12), to the on-board satellite communication apparatus (13) via a communication network.

3. The in-flight system according to claim 1, wherein the communication signal transmission unit (12) comprises:
a GSM/GPRS module (121) for transmitting the communication signals via a GPRS channel of GPRS network, or transmitting the communication signals in way of short messages via a SMS channel, and the GSM/GPRS module (121) comprises:
a standard RS232 bidirectional interface for bi-directionally receiving and transmitting the communication signals;
a SIM card connected with the standard RS232 bidirectional interface, wherein the SIM card has short-massage functions and GPRS functions for bidirectional transformation between communication signals and multimedia information; and
an antenna connected with the SIM card, wherein the antenna emits communication signals or multimedia information to the on-board satellite communication apparatus (13) so as to perform communication through the international communication satellite (2) and a ground base station (3), and receives communication signals or multimedia information coming from the on-board satellite communication apparatus (13); and
a Wi-Fi circuit module (122) wirelessly connected to a Wi-Fi network, for communicating with the international communication satellite (2) and a ground network (3') through the on-board satellite communication apparatus (13).

4. The in-flight system according to claim 3, wherein the on-board satellite communication apparatus (13) comprises an on-board mobile communication apparatus (131), a satellite communication assembly (132) and a satellite antenna (133), and the on-board satellite communication apparatus (13) is to emit the communication signals to the international communication satellite (2) through the on-board satellite communication apparatus (131) so as to perform communication via the ground base station (3) or the ground network (3'), and to receive communication signals coming from the international communication satellite (2) through the satellite antenna (133) so as to be transmitted to the communication signal transmission unit (12).

5. The in-flight system according to claim 4, wherein the on-board mobile communication apparatus (131) comprises a Wi-Fi network module, the Wi-Fi network module is to bidirectionally communicate signals or transmit multimedia information with the Wi-Fi circuit module (122).

6. The in-flight system of an infrared camera according to any one of claims 1-5, wherein the international communication satellite (2) transmits communication signals coming from the aircraft to a server (4) of the infrared camera (1) through a ground base station (3) or a ground network (3'), and transmits communication signals coming from the server (4) to the on-board satellite communication apparatus (13) through the ground base station (3) or the ground network (3') and also through the international communication satellite (2), wherein the server (4) is a computer or a mobile phone connected to the communication network.

7. The in-flight system of an infrared camera according to any one of claims 1-5, wherein the infrared camera (1) is rotatably mounted on a body (50) of the aircraft (5) through a pan and tilt (52), with a transparent hood (51) provided thereon to protect the infrared camera (1).

8. A communication method of the in-flight system according to anyone of claims 1 to 7, the method comprises steps of:
transforming image signals obtained by capturing infrared images of a monitored object by the infrared camera (1) into communication signals;
receiving and transmitting communication signals via a communication channel, performing aero-communication of the communication signals in way of free roaming; and
emitting the communication signals to an international communication satellite (2) through a satellite antenna, and receiving communication signals coming from the international communication satellite (2), wherein the communication signals comprises: communication signals obtained by signal transforming and related with image signals of the infrared images, and communication signals coming from a server (4).

9. The communication method according to claim 8, wherein the aero-communication of communication signals comprises a step of transmitting the communication signals via a GPRS channel of GPRS network, or a step of transmitting the communication signals via a SMS channel in way of short messages.

10. The communication method according to claim 8, wherein the aero-communication of communication signals comprises a step of transmitting the communication signals through a Wi-Fi network.

11. The communication method according to any one of claims 8-10, wherein the communication signals coming from the infrared camera (1) are transmitted to the server (4) through an on-board satellite communication apparatus (13) of the flight system of the infrared camera and via the international communication satellite (2) and its ground base station (3) or its ground network (3').

12. The communication method according to claim 11, wherein the communication signals coming from the server (4) are transmitted to the on-board satellite communication apparatus (13) of the flight system of the infrared camera via the ground base station 3 or the ground network (3'), and also through the international communication satellite (2), and then to the communication signal transmission unit (12) through the on-board satellite communication apparatus (13), so as to be output to the infrared camera (1).
